# EUROPÄISCHE PATENTSCHRIFT

(11) **EP 2 488 076 B1**
(45) Veröffentlichungstag und Bekanntmachung des Hinweises auf die Patenterteilung: **03.07.2013**
(21) Anmeldenummer: 10773571.4
(22) Anmeldetag: 13.10.2010
(51) Int. Cl.: A47J 31/40, A47J 31/42

(54) **ESPRESSOMASCHINE ODER KAFFEEVOLLAUTOMAT MIT AUTOMATISCHER BESTIMMUNG DER KORNGRÖSSENVERTEILUNG UND/ODER DES MAHLGRADS VON GEMAHLENEM KAFFEE**
ESPRESSO MACHINE OR FULLY AUTOMATIC COFFEE MACHINE HAVING AUTOMATIC DETERMINATION OF THE GRAIN SIZE DISTRIBUTION AND/OR THE DEGREE OF GRINDING OF GROUND COFFEE
MACHINE À EXPRESSO OU CAFETIÈRE ENTIÈREMENT AUTOMATIQUE, AVEC DÉTERMINATION AUTOMATIQUE DE LA DISTRIBUTION GRANULOMÉTRIQUE ET/OU DE LA FINESSE DE MOUTURE DU CAFÉ MOULU

(30) Priorität: 13.10.2009 DE 102009049229
(43) Veröffentlichungstag der Anmeldung: 22.08.2012
(73) Patentinhaber: WMF Württembergische Metallwarenfabrik Aktiengesellschaft, 73312 Geislingen/Steige (DE)
(72) Erfinder: CASADO GOMEZ, Sebastian, 70329 Stuttgart (DE); GUSSMANN, Jochen, 73527 Schwäbisch-Gmünd (DE)
(74) Vertreter: Pfenning, Meinig & Partner GbR
(86) Internationale Anmeldenummer: PCT/EP2010/006273
(87) Internationale Veröffentlichungsnummer: WO 2011/045055

(56) Entgegenhaltungen:
- WO-A1-2008/105017
- DE-A1- 3 107 549
- DE-C1- 3 615 158

## Beschreibung

Die vorliegende Erfindung bezieht sich auf eine Espressomaschine oder einen Kaffeevollautomaten mit einem Mahlwerk und einer einen Brüher und eine Brühkammer umfassenden Brüheinrichtung. Siehe DE-C-36 15 158.

Die Korngrößenverteilung in einer Menge von gemahlenem Kaffeepulver bzw. von gemahlenen Kaffeebohnen hat einen entscheidenden Einfluss auf die Brühzeit des Kaffees, das Aussehen und den Geschmack des fertigen Kaffeegetränks (beispielsweise Espresso, Kaffee Creme). Dies liegt daran, dass die Korngrößenverteilung u.a. den Kaffeemehlwiderstand, den der gemahlene Kaffee dem Wasser beim Durchströmen des Kaffeemehls mit Wasser entgegensetzt, und somit die Brühzeit des Kaffees bestimmt.

Unter der Korngrößenverteilung wird im Rahmen der vorliegenden Erfindung die Häufigkeitsverteilung des gemittelten Partikeldurchmessers einer definierten Menge von gemahlenen Kaffeebohnen verstanden. Diese Korngrößenverteilung weist bei einem vorgegebenen Mahlscheibenabstand des Mahlwerks typischerweise sowohl im oberen Bereich der Korngrößen (Grobanteil), als auch im unteren Bereich der Korngrößen (Feinanteil) ein lokales Maximum in der Häufigkeitsverteilung auf: Die Korngrößenverteilung lässt sich durch den sog. x₆₃,₂-Wert charakterisieren. Dieser Wert ist so definiert, dass 63,2 % der Körner einer gegebenen Korngrößenverteilung eine geringere Größe aufweisen, als der x_{63,2}-Wert. Der x_{63,2}-Wert kann auch als Mahlgrad bezeichnet werden (wobei als Mahlgrad auch ein anderer die Korngrößenverteilung charakterisierender Größenwert verwendet werden kann).

Diese beiden Größen (Korngrößenverteilung und Mahlgrad) werden nachfolgend vereinfacht auch synonym verwendet.

Bisher kann die Korngrößenverteilung und/oder der Mahlgrad, die bzw. den eine Espressomaschine oder ein Kaffeevollautomat (eine solche Maschine wird nachfolgend alternativ auch als vollautomatische Kaffeemaschine oder kurz als Kaffeemaschine bezeichnet) liefert ohne aufwendige Geräte und Verfahren nur näherungsweise optisch beurteilt bzw. indirekt über die Brühzeit ermittelt werden. Letztere hängt aber auch von der Dosiermenge und der Anpresskraft des Kaffeemehls im Brüher der Kaffeemaschine ab. Die Einstellung des Mahlwerks (nachfolgend vereinfacht auch als Mühle bezeichnet) der Kaffeemaschine während der Produktion derselben erfolgt bisher lediglich über den Mahlscheibenabstand, also den Abstand der einzelnen Mahlscheiben des Mahlwerks.

Die Korngrößenverteilung korreliert jedoch nur bedingt mit dem Mahlscheibenabstand und unterliegt weiteren nicht einstellbaren Größen wie der Planparallelität oder der Feinzahntiefe des jeweiligen Mahlscheibenpaars. Eine Einstellung der Korngrößenverteilung über den Mahlscheibenabstand ist somit nicht eindeutig und reproduzierbar sicherzustellen. Daraus resultieren sehr unterschiedliche Mahlgrade bei der Auslieferung der Kaffeemaschine trotz gleicher Einstellung des Mahlgrads. Darüberhinaus beeinflussen weitere Faktoren, wie beispielsweise die Bohnensorte oder der Röstgrad, die Korngrößenverteilung, diese weiteren Faktoren sind jedoch zum Teil erst beim Endkunden bekannt. Der Mahlgrad wird daher momentan erst beim Endkunden der Kaffeemaschine durch einen Kundendiensttechniker des Herstellers der Kaffeemaschine nach Gefühl (nach Geschmack des Kaffees, nach der optischen Beurteilung von gemahlenem Kaffeemehl und/oder nach der Brühzeit) eingestellt. Beim Wechseln der Bohnensorte oder der Abnutzung der Mahlscheiben ist somit ein erneutes Einstellen des Mahlgrads erforderlich.

Die Aufgabe der vorliegenden Erfindung ist es daher, eine Espressomaschine oder einen Kaffeevollautomaten zur Verfügung zu stellen, die bzw. der eine automatische Bestimmung der Korngrößenverteilung ermöglicht, die bzw. der es also ermöglicht, dass die Korngrößenverteilung, die das jeweilige Mahlwerk momentan und im Zusammenhang mit der verwendeten Bohnensorte und dem gegebenen Mahlscheibenabstand liefert, ermittelt und ggf. auch auf einen gewünschten Wert angepasst werden kann. Aufgabe der Erfindung ist es darüberhinaus, ein entsprechendes Verfahren zum Bestimmen der Korngrößenverteilung und/oder des Mahlgrads zur Verfügung zu stellen.

Diese Aufgabe wird durch eine Espressomaschine oder einen Kaffeevollautomaten gemäß Anspruch 1 und durch ein Verfahren gemäß Anspruch 10 gelöst. Vorteilhafte Ausgestaltungsvarianten lassen sich jeweils den abhängigen Ansprüchen entnehmen.

Nachfolgend wird die vorliegende Erfindung zunächst allgemein, dann anhand eines Ausführungsbeispiels beschrieben.

Die grundlegende Idee der vorliegenden Erfindung ist, dass die Kaffeemehldichte (also die Dichte von gemahlenem Kaffeepulver, gemessen beispielsweise in g/cm³) u.a. abhängig von den Korngrößen, die eine solche Mahlung beinhaltet, ist. So haben grobe Mahlungen mit überwiegend grober Kornstruktur (überwiegend große Körner in der Korngrößenverteilung) in einem bestimmten Raummaß eine geringere Masse als feinere Mahlungen (überwiegend kleine Körner in der Korngrößenverteilung), bei denen kleinere Körner die Zwischenräume besser auffüllen. Mit anderen Worten hängt die Kaffeemehldichte von der Korngrößenverteilung ab; es besteht ein (zumindest näherungsweise) eindeutiger Zusammenhang zwischen diesen beiden Größen.

Im Rahmen der vorliegenden Erfindung wird unter der Masse, dem Volumen oder der Dichte einer definierten Kaffeepulvermenge nicht ausschließlich der exakte physikalische Wert der Masse, des Volumens oder der Dichte dieser Kaffeepulvermenge verstanden, sondern auch über die nachfolgend noch im Detail beschriebenen Messverfahren bestimmte (für diese Kaffeepulvermenge charakteristische) Größenwerte, die mit diesen exakten physikalischen Werten in einem eindeutigen Zusammenhang stehen und/oder die diese exakten physikalischen Werte eindeutig charakterisieren (also z.B. Größenwerte, die mit den exakten physikalischen Werten linear skalieren).

Entscheidend ist bei der vorliegenden Erfindung somit nicht, dass die exakte Dichte, das exakte Volumen oder die exakte Masse bestimmt werden, sondern dass unter eindeutigen und reproduzierbaren Messbedingungen (z.B. mit definierter Anpresskraft) diese physikalischen Werte eindeutig charakterisierende Größenwerte gewonnen und ausgewertet werden.

Somit kann zunächst durch Bestimmung der Masse und des Volumens einer definierten Mahlung (bzw. von diese physikalischen Werte charakterisienden Größen) die Dichte bzw. eine diese charakterisierende Größe dieser Mahlung ermittelt werden und von dieser Dichte auf die Korngrößenverteilung bzw. den Mahlgrad der Mahlung geschlossen werden.

Die erfindungsgemäße Kaffeemaschine weist hierzu einen zum Bestimmen des Mehlvolumens einer gemahlenen Kaffeepulvermenge ausgebildeten Volumenbestimmungsabschnitt, einen zum Bestimmen der Mehlmasse dieser Kaffeepulvermenge ausgebildeten Massenbestimmungsabschnitt und einen Berechnungsabschnitt auf, wobei mit letzterem auf Basis eines vordefinierten Zusammenhangs zwischen der Korngrößenverteilung und/oder dem Mahlgrad einer Mahlung einerseits und der Masse und dem Volumen oder einer aus diesen beiden Größen abgeleiteten Größe (z.B. der Dichte) der Mahlung andererseits aus dem mit dem Volumenbestimmungsabschnitt bestimmten Mehlvolumen und der mit dem Massenbestimmungsabschnitt bestimmten Mehlmasse der Mahlung die Korngrößenverteilung und/oder der Mahlgrad der Mahlung berechnet werden kann/können.

Der Volumenbestimmungsabschnitt, der Massenbestimmungsabschnitt und der Berechnungsabschnitt können dabei im Rahmen einer einzelnen Baugruppe der erfindungsgemäßen Kaffeemaschine realisiert sein. In einer vorteilhaften Variante erfolgt die Volumenbestimmung und/oder die Massenbestimmung der Mahlung bzw. der definierten Kaffeepulvermenge in der Brühkammer der Brüheinrichtung der Kaffeemaschine. Grundsätzlich ist es jedoch auch möglich, in der Kaffeemaschine eine (in Bezug auf die Brühkammer gesehen) separate Sammelkammer vorzusehen, die zur Aufnahme einer definierten gemahlenen Kaffeepulvermenge ausgebildet ist und in der bzw. mit der das Mehlvolumen und/oder die Mehlmasse bestimmt werden kann/können.

Vorteilhafterweise geschieht diese Bestimmung mit Hilfe eines Presselementes, das zum Verpressen der definierten Kaffeepulvermenge in der Sammelkammer (bzw. in der Brühkammer) ausgebildet ist. Bei diesem Presselement kann es sich beispielsweise um einen Brühkolben der Brüheinrichtung handeln; der Brüher der Brüheinrichtung ist in diesem Fall als Brühzylinder ausgebildet, in dem (als Presselement) der Brühkolben verschiebbar ist.

Wie nachfolgend noch näher beschrieben, erfolgt die Volumenbestimmung der definierten Kaffeepulvermenge bzw. der Mahlung (mit Hilfe des Volumenbestimmungsabschnitts) vorteilhafterweise durch Trockenpressen der Kaffeepulvermenge und durch Bestimmen einer Position und/oder eines Verfahrweges des Presselementes bei bzw. nach einem solchen Trockenpressen der Kaffeepulvermenge.

Die Massenbestimmung der definierten Kaffeepulvermenge erfolgt vorteilhafterweise auf Basis einer Nasspressung der Kaffeepulvermenge und ebenfalls der Bestimmung einer Position und/oder eines Verfahrweges des Presselementes nach bzw. während dieser Nasspressung. Dabei kann auf Basis dieser Position und/oder dieses Verfahrweges zunächst das Nasspressvolumen der gepressten Kaffeepulvermenge bestimmt werden und aus diesem Nasspressvolumen mittels eines vordefinierten Zusammenhangs zwischen der Masse von gemahlenem Kaffee einerseits und dem Nasspressvolumen des gemahlenen Kaffees andererseits die Mehlmasse.

Das Verpressen der Kaffeepulvermenge bei der Trockenpressung und bei der Nasspressung erfolgt vorteilhafterweise mit konstanten Presskräften, wobei die Kaffeepulvermenge im trockenen Zustand mit einer kleineren Presskraft verpresst wird, als im Nasszustand.

Bevorzugt wird hierbei mit ein und derselben Kaffeemehlmenge zunächst ein Trockenpressvorgang zur Bestimmung des Mehlvolumens und anschließend (nach Durchfeuchtung dieser Kaffeemehlmenge) ein Nasspressvorgang zur Bestimmung der Kaffeemehlmasse durchgeführt. Bereits aus diesen beiden Werten kann ein Dichtewert zuverlässig bestimmt werden, mit dem dann anhand des vorbeschriebenen Zusammenhangs die Korngrößenverteilung und/oder der Mahlgrad berechnet werden kann.

Es ist jedoch selbstverständlich auch möglich, mit mehreren definierten Kaffeepulvermengen nacheinander jeweils eine Trockenpressung und eine Nasspressung durchzuführen, somit mehrere einzelne Dichtewerte wie vorbeschrieben zu bestimmen und diese Dichtewerte dann zu mitteln. Aus dem entsprechenden Mittelwert kann dann aus dem vorbeschriebenen Zusammenhang der Mahlgrad bzw. die Korngrößenverteilung berechnet werden.

Zur Bestimmung des Mehlvolumens und/oder der Mehlmasse der Kaffeepulvermenge, insbesondere zur Bestimmung der vorbeschriebenen Position und/oder des vorbeschriebenen Verfahrwegs (aus dem dann das Mehlvolumen und die Mehlmasse abgeleitet werden können) können im Rahmen der vorliegenden Erfindung eine Vielzahl möglicher Sensorbauteile eingesetzt werden: So kann beispielsweise die Zahl der Umdrehungen um die Spindelachse einer das Presselement antreibenden Spindel (Antrieb mit Hilfe eines Antriebsmotors) erfasst werden, um schließlich aus dieser Umdrehungszahl die gesuchte Position und/oder der gesuchte Verfahrweg zu bestimmen.

Alternativ kann ein Lageerkennungssensor auf Basis eines Hallelements, eine Lichtschranke, ein ultraschallbasierter Lageerkennungssensor oder ein kapazitiver Lageerkennungssensor eingesetzt werden. Der Aufbau solcher Sensorbauteile bzw. Elemente ist dem Fachmann bekannt.

Im Rahmen der vorliegenden Erfindung ist es auch möglich, die Presskraft (oder den Presskraftverlauf) beim Zusammenpressen der Kaffeepulvermenge zu bestimmen (dies kann beispielsweise durch Messen und Auswerten der Stromaufnahme eines das Presselement antreibenden Antriebsmotors durchgeführt werden): Diese Presskraftbestimmung dient dazu, die Reproduzierbarkeit der Messbedingungen sicherzustellen, indem z.B. eine definierte Kaffeepulvermenge nur bis zum Erreichen einer vordefinierten Presskraft verdichtet wird und dann bei Erreichen dieser Presskraft die Pressung beendet und die Füllhöhe des Kaffeepulvers in der Brühkammer bestimmt wird (siehe nachfolgendes Ausführungsbeispiel).

Schließlich weist in einer vorteilhaften Variante die erfindungsgemäße Kaffeemaschine eine Stell- und Regelvorrichtung auf, mit der ein Parameter, der die Korngrößenverteilung und/oder den Mahlgrad der Mahlung beeinflusst, verändert werden kann. Beispielsweise kann hierbei zunächst für eine definierte Kaffeepulvermenge wie vorbeschrieben die Korngrößenverteilung und/oder der Mahlgrad bestimmt werden und anhand des bestimmten Wertes kann dann der mittlere Abstand zweier Mahlscheiben des Mahlwerks solange verändert werden, bis eine erneute Bestimmung der Korngrößenverteilung und/oder des Mahlgrads nach verändertem Abstand die gewünschte Korngrößenverteilung und/oder den gewünschten Mahlgrad ergibt.

Nachfolgend wird die vorliegende Erfindung anhand eines Ausführungsbeispiels beschrieben:

Es zeigen
- Figur 1: den Aufbau des Kaffeevollautomaten gemäß dieses Ausführungsbeispiels (schematische Darstellung) und
- Figur 2: ein Beispiel für einen erfindungsgemäß genutzten Zusammenhang zwischen dem Mahlgrad einer Kaffeepulvermenge und der Dichte dieser Kaffeepulvermenge.
- Figur 3: zeigt zwei Tabellen für ermittelte Zusammenhänge zwischen physikalischen Größen.

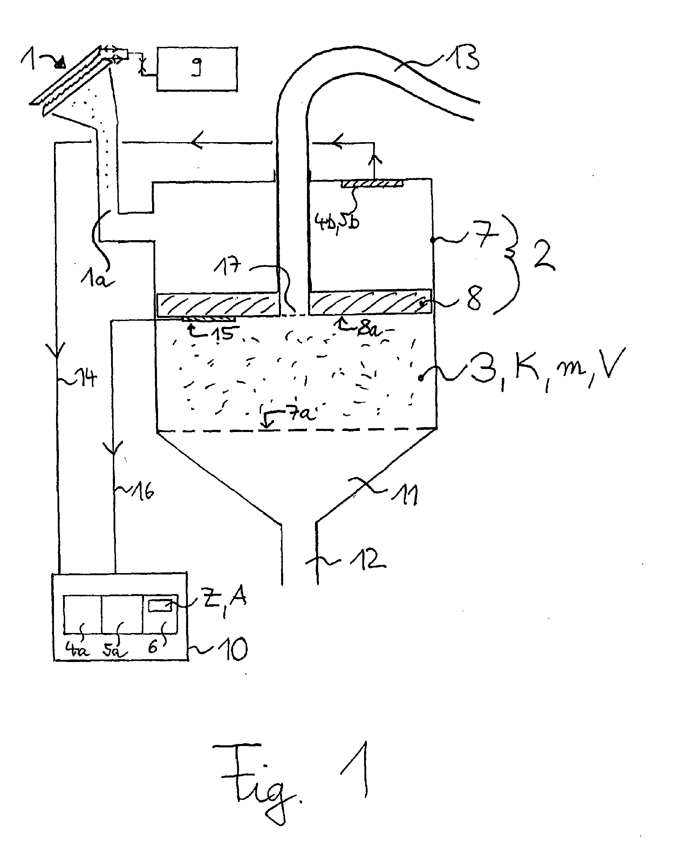

Der in Figur 1 nur ausschnittsweise dargestellte Kaffeevollautomat weist ein Mahlwerk 1 mit zwei einzelnen Mahlscheiben auf. Das vom Mahlwerk 1 gemahlene Kaffeemehl gelangt über einen Zufuhrabschnitt 1a in das Innere eines Brühzylinders 7. In diesem Brühzylinder 7 ist der Brühkolben 8 beweglich angeordnet. Der Brühzylinder 7 und der in dessen Innenraum in Richtung der Zylinderachse beweglich angeordnete Brühkolben 8 bilden zusammen den Brüher 2 der Brüheinrichtung des Kaffeevollautomaten.

Zwischen einer Endfläche 8a des Brühkolbens 8 (hier die unten liegende Endfläche des Brühkolbens 8) und einer dieser Endfläche 8a gegenüberliegenden Endfläche 7a des Brühzylinders 7 ist die Brühkammer 3 der Brüheinrichtung des Kaffeevollautomaten ausgebildet.

Wie die Figur zeigt, ist, wenn der Brühkolben 8 im weitest möglich zurückgezogenen Zustand angeordnet ist (also im gezeigten Fall weitest möglich nach oben zurückgeschoben ist) eine Verbindung zwischen dem Zufuhrabschnitt 1a und dem Brühraum 3 ausgebildet, durch die das gemahlene Kaffeemehl in den Brühraum 3 überführt werden kann. Im gezeigten Zustand (Brühkolben 8 nach unten verschoben) ist diese Verbindung dann verschlossen (mit einem nicht gezeigten Verschließelement), so dass im gezeigten Zustand kein weiteres Kaffeemehl der Brühkammer 3 zugeführt werden kann.

Die unten liegende Zylinderdeckelendfläche 7a bzw. das entsprechende Brühzylinderende ist im vorliegenden Fall als ebenes, parallel zum unten liegenden Brühkolbenende 8a des Brühkolbens 8 angeordnetes Sieb ausgebildet, durch das lediglich (nach Durchströmen des in der Brühkammer 3 oberhalb dieses Siebs angeordneten Kaffeepulvers) Wasser hindurchtreten kann.

Durch Verschieben des Brühkolbens 8 entlang der Zylinderachse des Brühzylinders 7 nach unten (Verringerung des Abstandes der einander zugewandten Endflächen 7a, 8a) wird somit die in der Brühkammer 3 angeordnete Kaffeepulvermenge K verpresst. Im Zentrum des Brühkolbens 8 ist eine Wasseraustrittsöffnung 17 angeordnet, der über einen entlang der Zylinderachse des Brühzylinders 7 angeordneten, von der Endfläche 8a nach oben wegführenden Schlauch 13 das zum Durchströmen des Kaffeepulvers 3 vorgesehene Heißwasser zugeführt werden kann. Diese Wasserzufuhr geschieht bei verpresster Kaffeepulvermenge K in der Brühkammer 3 unter ausreichend hohem Druck, so dass das Heißwasser durch die verpresste Kaffeepulvermenge K hindurchgedrückt wird und anschließend über das Sieb 7a, in den unterhalb des Siebs 7a angeordneten Auslaufraum 11 tritt und über den sich nach unten anschließenden Ablauf 12 (der ein nicht gezeigtes Ventil aufweist) abgeführt werden kann.

Mit den vorbeschriebenen Bauteilen des Kaffeevollautomaten erfolgt erfindungsgemäß die Berechnung der Korngrößenverteilung der Kaffeepulvermenge K in zwei Schritten wie folgt:

### Schritt 1: Volumenbestimmung

Zunächst erfolgt die Ermittlung des Mehlvolumens V der vordefinierten Kaffeepulvermenge K in der Brühkammer 3 der Brüheinrichtung dadurch, dass mittels des Mahlwerks 1 die der Menge K entsprechende Kaffeebohnenanzahl vermahlen und das Mahlgut über den Verbindungsabschnitt 1a der Brühkammer 3 zugeführt wird. Der Brühkolben 8 wird dann mit einer vordefinierten, konstanten ersten Anpresskraft (Trockenanpresskraft) gegen die Kaffeepulvermenge K gepresst. Diese zum Zusammenpressen des Kaffeepulvers K im Trockenzustand notwendige erste Anpresskraft kann beispielsweise mit Hilfe eines hier nicht gezeigten Federelements realisiert werden. Dabei wird die Pressung nach Erreichen der ersten Anpresskraft beendet, d.h. der Brühkolben 8 wird an der erreichten Position "eingefroren", d.h. an dieser Position gehalten, und es wird wie nachfolgend beschrieben das verpresste Volumen V bestimmt.

Das mit Hilfe des Stempels bzw. des Brühkolbenendes 8a realisierte, verpresste Volumen V der Kaffeepulvermenge K (bzw. der verbleibende Raum der Brühkammer 3) wird nun wie folgt bestimmt: An der oben liegenden, inneren Innenwandung der oberen Zylinderdeckelfläche (also außerhalb der Brühkammer 3 und oberhalb des Brühkolbens 8) weist der Brühzylinder 7 ein Ultraschallsensorelement auf, das hier mit den Bezugszeichen 4b, 5b versehen ist. Mit Hilfe dieses Ultraschallsensorelements kann auf dem Fachmann bekannte Art und Weise die momentane Position des Presselements bzw. Brühkolbens 8 innerhalb des Brühzylinders 7 festgestellte werden. Anhand dieser Position lässt sich die Füllhöhe h₁ des definiert verpressten Kaffeepulvers in der Brühkammer 3 und daraus (eine zylinderförmige Brühkammer mit Radius r vorausgesetzt) gemäß V = h₁ · r² · π das verbleibende Volumen in der Brühkammer 3 bzw. das Mehlvolumen V des trocken verpressten Kaffeepulvers K bestimmen. Hierzu wird der entsprechende Positionsmesswert des Ultraschallsensorelements 4b, 5b über eine Messdatenleitung 14 an einen Mikrocontroller 10 gesendet. In dem Mikrocontroller 10 ist ein Abschnitt 4a (hier ein Speicherabschnitt des Mikrocontrollers 10, in den ein entsprechendes Auswerteprogramm geladen wurde) angeordnet, der aus dem vorbeschriebenen Messwert das gesuchte Mehlvolumen V berechnet.

Im vorliegenden Fall umfasst der erfindungsgemäße Volumenbestimmungsabschnitt 4 somit das Ultraschallsensorelement 4b, 5b, die Messdatenleitung 14 und den Abschnitt 4a des Mikrocontrollers 10 und die Bestimmung des gesuchten Mehlvolumens V geschieht über eine Auswertung der Kaffeemehlkuchenhöhe auf Basis der Brüherposition bzw. des Brüherverfahrweges. Die vorbeschriebene, konstante erste Anpresskraft (Trockenanpresskraft) beträgt beispielsweise 100 N.

Im Ausführungsbeispiel ist somit die Sammelkammer, die zur Aufnahme der auszuwertenden Kaffeepulvermenge K verwendet wird, identisch mit der Brühkammer 3. Alternativ dazu (hier nicht gezeigt) kann jedoch auch eine separate Sammelkammer, in der dann auf entsprechende Art und Weise die Kaffeepulvermenge hinsichtlich des Mehlvolumens V (und auch hinsichtlich der Mehlmasse m, siehe nachfolgend) ausgewertet werden kann, verwendet werden.

Alternativ zur gezeigten Ausführungsform kann die Brüherposition bzw. das Volumen der Brühkammer 3 jedoch auch durch Ermittlung der Umdrehung einer Spindel bzw. eines diese Spindel antreibenden Motors bestimmt werden (in diesem Fall ist der Brühkolben 8 als Spindel ausgebildet; der Brühkolben 8 wird somit mittels einer Gewindebewegung in dem Brühzylinder 7 auf und ab bewegt). Hierzu kann ein Hallsensor eingesetzt werden, der die Umdrehungszahl des Motors mit Hilfe eines an der Spindel angebrachten Magneten bestimmt.

In weiteren alternativen Ausführungsformen kann das Mehlvolumen V der Kaffeepulvermenge K im Brüher auch direkt über eine Lichtschranke oder einen kapazitiven Sensor gemessen werden. Auch solche Sensoren sind dem Fachmann bekannt.

Im Volumenbestimmungsschritt gemäß der Erfindung wird somit aus der Brüherposition das Brühkammervolumen bzw. das Mehlvolumen in der Brühkammer (beispielsweise in cm³) ermittelt. Der gesuchte Mahlgrad bzw. die gesuchte Korngrößenverteilung des Kaffeemehls beeinflusst dieses Volumen.

### Schritt 2: Bestimmung der Mehlmasse m

Mittels des Schlauchs 13 wird nun über den zentral im Brühkolben 8 angeordneten Austritt 17 dem (bereits verpressten) Kaffeemehl K in der Brühkammer 3 Heißwasser (oder auch Kaltwasser) zugeführt. Hierzu quellen die Kaffeemehlkörner auf, so dass, wenn man diese aufgequollenen Körner mit ausreichend hoher Kraft verpresst, die gesuchte Masse der Kaffeemehlmenge unabhängig von der ursprünglichen (trockenen) Korngrößenverteilung zum verpressten Volumen (bzw. zur Füllhöhe in der Brühkammer) proportional ist. Nach der Wasserzufuhr wird das bereits verpresste, nasse Kaffeemehl somit mittels einer vorbestimmten zweiten, konstanten Anpresskraft, die um mindestens den Faktor 5, bevorzugt um mindestens den Faktor 10 größer ist, als die im Schritt 1 gewählte Anpresskraft, weiter zusammengepresst. Auch diese zweite Anpresskraft wird mit Hilfe der (nicht gezeigten) Federeinheit des Brühkolbens 8 realisiert; die zweite Anpresskraft ist hierbei deutlich größer als die im Schritt 1 gewählte (Trocken-)Anpresskraft. Beispielsweise wird für die zweite (Nass-)Anpresskraft ein Wert von 1000 N verwendet. Es gilt dann für die gesuchte Masse m: m ∼ V = h₂ · r² · π (mit h2 = der bestimmten Füllhöhe im Nasszustand). Bevorzugt beträgt das Verhältnis von Nass- zu Trockenanpresskraft etwa 10 bis 20 (wobei dieses Verhältnis theoretisch gesehen, eine ausreichend große Trockenanpresskraft zum Erzielen eines kompaktierten, reproduzierbaren Trockenvolumens vorausgesetzt, so groß wie möglich sein sollte).

Wie vorbeschrieben wird nach dem weiteren Verpressen des Kaffeemehls K mit Hilfe der Ultraschallsensoreinheit 4b, 5b erneut das noch verbleibende Brühkammervolumen der Brühkammer 3 bzw. das Nasspressvolumen der Kaffeepulvermenge K bestimmt. Hierzu sendet die Sensoreinheit 4b, 5b einen entsprechenden Messwert über die Messdatenleitung 14 an einen weiteren im Mikrocontroller 10 ausgebildeten Abschnitt 5a (auch dieser weitere Abschnitt 5a ist hier als mit einem geeigneten Auswerteprogramm beladener Speicherabschnitt des Mikrocontrollers 10 ausgebildet).

Die Massenbestimmungseinheit 5 umfasst im vorliegenden Fall somit den Sensor 4b, 5b, die Messdatenleitung 14 und den Abschnitt 5a. Somit realisiert das Ausführungsbeispiel einen Fall, in dem der Volumenbestimmungsabschnitt 4 und der Massenbestimmungsabschnitt 5 durch ein und dieselben körperlichen Bauelemente ausgebildet sind. Zur Ausbildung des Volumenbestimmungsabschnitts 4 und des Massenbestimmungsabschnitts 5 können jedoch auch unterschiedliche Bauelemente verwendet werden.

Aus dem bestimmten Nasspressvolumen (zweites Brühkammervolumen) wird nun die gesuchte Mehlmasse m des in der Brühkammer 3 verpressten Kaffeepulvers K wie folgt berechnet: In einem Speicherabschnitt des als Teil des Mikrocontrollers 10 ausgebildeten Berechnungsabschnitts 6 ist eine vordefinierte Tabelle (beispielsweise: Look-Up-Tabelle) A abgelegt. Diese Tabelle A beschreibt einen Zusammenhang zwischen der Masse von gemahlenem Kaffeepulver einerseits und dem Nassvolumen des so gemahlenen Kaffeepulvers andererseits. Nach Zufuhr des entsprechenden Nassmesswertes des Sensors 4b, 5b über die Messdatenleitung 14 können somit der Abschnitt 5a und der Berechnungsabschnitt 6 auf Basis der Tabelle A aus dem erfassten Nassvolumen die gesuchte Mehlmasse m (beispielsweise: Massenberechnung in g) berechnen.

Zum Erstellen der vordefinierten Tabelle A wird eine bekannte Masse an Kaffeemehl in das Prüfgefäß (hier: Brühkammer 3) gegeben und unter Zugabe von Wasser über das Presselement (Brühkolben 8) mit einer konstanten Kraft (hier wie vorbeschrieben: 1000 N) beaufschlagt. Während der Krafteinwirkung (bzw. wenn keine weitere Volumenreduktion in der Brühkammer mehr erfolgt, wenn also das verpresste Kaffeemehl dem Brühkolben so viel Widerstand entgegensetzt, dass der Brühkolben zum Stillstand kommt) wird wie vorbeschrieben die Höhe h₂ ermittelt. Aus dieser Höhe ergibt sich dann wie vorbeschrieben über V = h₂ · r² · π das zugehörige Volumen V der bekannten Masse in der Brühkammer .

Dieser Vorgang wird mit der immer gleichen Kraft (z.B. 1000 N) und veränderlichen Kaffeemehlmassen wiederholt. Aus den Ergebnissen erhält man anschließend eine Geradengleichung (durch dem Fachmann bekannte mathematische Fitverfahren), mit deren Hilfe im Berechnungsabschnitt 6 aus einem während einer Pressung ermittelten Wert von h₂ (bzw. dem zugehörigen Volumen V) die gesuchte Masse m ermittelt werden kann.

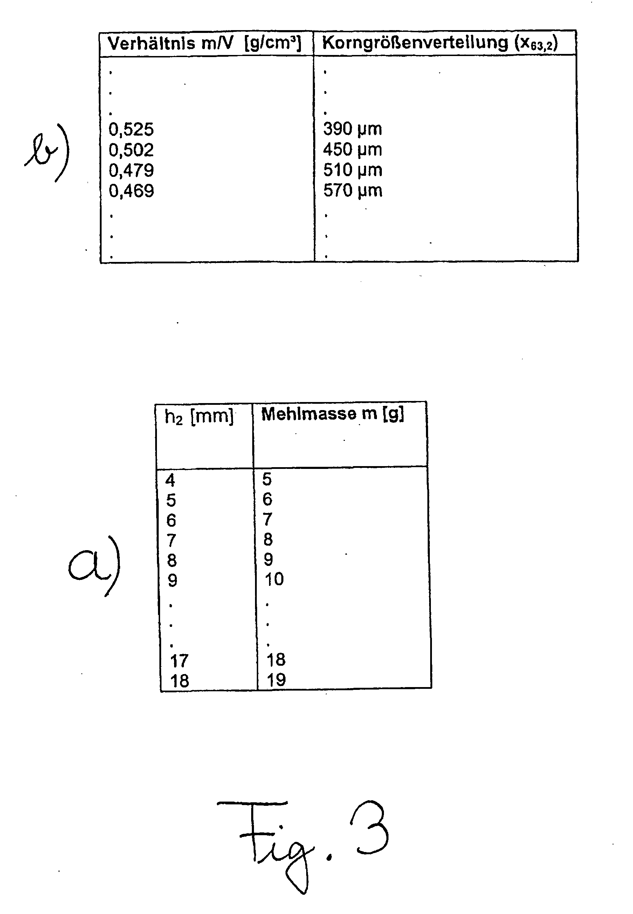

Figur 3a zeigt ein Beispiel für eine solche Umrechungstabelle A.

Nachdem die beiden Werte Mehlvolumen V und Mehlmasse m bestimmt bzw. berechnet wurden, erfolgt dann das Ermitteln des gesuchten Mahlgrades bzw. der gesuchten Korngrößenverteilung wie folgt: Es wird das Verhältnis m/V gebildet, also die Dichte der Kaffeepulvermenge K (beispielsweise in g/cm³) berechnet. In einem Speicherabschnitt der Berechnungseinheit 6 ist der Zusammenhang Z (beispielsweise ebenfalls in Form einer Tabelle bzw. Look-Up-Tabelle) zwischen der Korngrößenverteilung und/oder dem Mahlgrad von gemahlenem Kaffee einerseits und der Dichte des gemahlenen Kaffees andererseits abgespeichert.

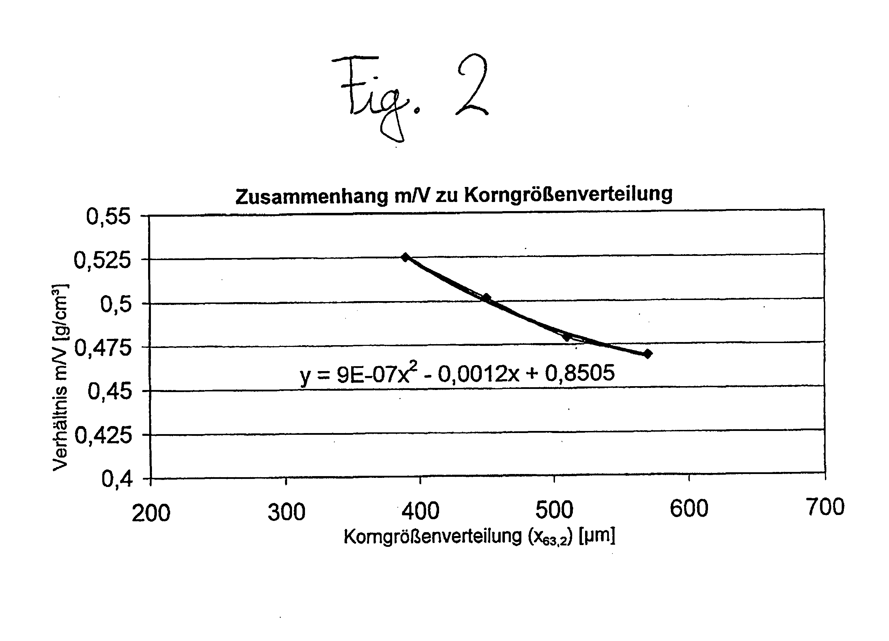

Figur 2 zeigt ein Beispiel für einen solchen in einer Tabelle hinterlegten Zusammenhang Z zwischen der Korngrößenverteilung einer Kaffeepulvermenge K (in Form des Mahlgrads) und der zugehörigen Dichte der Kaffeepulvermenge.

In der Kaffeemaschinensoftware kann somit, beispielsweise auf Basis einer aus Versuchen abgeleiteten Formel, eine Look-Up-Tabelle Z hinterlegt werden, mit der jedem ermittelten Dichtewert eine Korngrößenverteilung zugeordnet werden kann.

Die Berechnungseinheit 6 berechnet daher auf Basis des gebildeten Dichtewerts m/V aus dieser Tabelle Z die gesuchte Korngrößenverteilung bzw. den gesuchten Mahlgrad.

Zur Ermittlung des Zusammenhangs Z wird Kaffeemehl einer bekannten Masse und einer bekannten Korngrößenverteilung (bzw. mit einem bekannten Mahlgrad bzw. x₆₃,₂-Wert) in das Prüfgefäß (Brühkammer 3) gegeben und über das Presselement (Brühkolben 8) mit einer konstanten Kraft von hier beispielsweise 100 N beaufschlagt. Hierbei wird wie vorbeschrieben kein Wasser zugegeben (Trockenpressung). Während der Krafteinwirkung (bzw. wenn das verpresste, trockene Kaffeemehl dem Presselement so viel Widerstand entgegensetzt, dass sich dieses nicht mehr bewegt) wird wie vorstehend beschrieben die Höhe h1 ermittelt. Aus der Höhe h₁ wird gemäß V = h₁ · r² · π das Volumen V berechnet. Da die Masse des Kaffeemehls bekannt ist, kann das Verhältnis m/V und somit die zugehörige Dichte gebildet werden.

Dieser Vorgang wird mit der immer gleichen Kraft (100 N) und Mehlmasse und mit veränderlichen Korngrößenverteilungen (bzw. x_{63,2}-Werten) wiederholt. Je geringer dabei die Abstufungen der Korngrößenverteilungen (bzw. der x_{63,2}-Werte) sind, desto genauer kann später die Umrechnung erfolgen. Aus den Ergebnissen kann anschließend mit Hilfe z.B. eines polynombasierten Fitverfahrens (vgl. Figur 2) eine Gleichung generiert werden, mit deren Hilfe in dem Berechnungsabschnitt 6 aus einem Verhältnis m/V die gesuchte dazugehörige Korngrößenverteilung (bzw. der x₆₃,₂-Wert) ermittelt werden kann. Figur 2 zeigt einen entsprechenden Zusammenhang Z, Figur 3b zeigt die zugehörigen Messwerte als Beispiel.

Um eine etwaige Streuung des Ergebnisses zu minimieren, kann erfindungsgemäß die Ermittlung der Dichte wie vorbeschrieben mehrmals wiederholt werden, aus den so bestimmten Dichtewerten kann dann ein Mittelwert gebildet werden, der zum Berechnen der gesuchten Korngrößenverteilung verwendet werden kann.

Der Kaffeevollautomat des Ausführungsbeispiels weist neben den vorbeschriebenen Elementen eine Stell- und Regelvorrichtung 9 (die wiederum einen nicht gezeigten Stellmotor umfasst) auf. Diese Stell- und Regelvorrichtung 9 ist mit der Berechnungseinheit 6 zum Datenaustausch verbunden (nicht gezeigt). Auf Basis einer wie vorbeschrieben bestimmten Korngrößenverteilung erlaubt die Einheit 9 ein Anpassen des Abstands der beiden Mahlscheiben des Mahlwerks 1. Zeigt somit die bestimmte Korngrößenverteilung einen unerwünschten Wert, so kann auf Basis dieses Werts das Mahlwerk 1 des Kaffeevollautomaten nachgeregelt werden. Durch erneute Bestimmung der Korngrößenverteilung wie vorbeschrieben und ggf. erneutes Einregeln mit der Einheit 9 kann dann schrittweise und automatisch eine gewünschte Einstellung des Kaffeevollautomaten hinsichtlich des Mahlgrades bzw. der Korngrößenverteilung vorgenommen werden.

Auf der unten liegenden, d.h. der Brühkammer 3 zugewandten Seite 8a des Brühkolbens 8 weist der Kaffeevollautomat des Ausführungsbeispiels zudem einen Drucksensor 15 auf, dessen Messwerte mittels einer Datenleitung 16 an den Mikrocontroller 10 übertragen werden können. Dieser Sensor 15 dient der Bestimmung der momentanen Anpresskraft (beispielsweise der vorbeschriebenen Trockenanpresskraft bzw. Nassanpresskraft) und damit zum Abschalten des Anpressens nach Erreichen einer vorbestimmten Kraft bzw. zum Sicherstellen reproduzierbarer Messbedingungen. Alternativ dazu kann die Presskraft des Brühers jedoch auch über die Auswertung der Stromaufnahme eines zum Pressen des Brühkolbens 8 gegen die Kaffeepulvermenge K eingesetzten Brühermotors bestimmt werden. Als Sensor 15 kann beispielsweise ein Piezosensor verwendet werden; auch andere direkte Kraftmessmethoden sind möglich.

Gegenüber den vorbeschriebenen, bekannten Möglichkeiten zur Bestimmung der Korngrößenverteilung weist die vorliegende Erfindung eine Reihe wesentlicher Vorteile auf:

So ergibt sich erfindungsgemäß eine Ersparnis von Kaffeemehl und Zeit, da in einem aufeinander folgenden Vorgang (den oben beschriebenen zwei Schritten) mit ein und demselben Kaffeemehl und mit geringem Zeitbedarf sowohl trocken als auch nass gepresst werden kann.

Der vorbeschriebene Messvorgang kann auch während des Kaffeebrühens durchgeführt werden, so dass auch während der Brühungen die Möglichkeit besteht, den Mahlgrad zu kontrollieren und ggf. nachzustellen.

Durch die vorbeschriebene Stell- und Regelvorrichtung lässt sich die Espressomaschine bzw. der Kaffeevollautomat automatisch auf einen gewünschten Mahlgrad einstellen bzw. bei Veränderungen (z.B. bei Verwendung einer anderen Bohnensorte und/oder bei Abnutzung der Mahlscheiben) automatisch nachregeln.

Die Korngrößenverteilung kann schnell und einfach ermittelt und angepasst werden, und dies ohne zusätzliche Hilfsmittel.

Zusammen mit der Korngrößenverteilung kann in einem Vorgang die Mühlencharakteristik, also die Abhängigkeit des Mahlgrads von der Mahlleistung in g pro Zeiteinheit, ermittelt werden: Mahlgrad und Masse werden wie vorstehend beschrieben ermittelt, durch einfache Zeitmessung erhält man die Mahlleistung.

Die so ermittelte Mühlencharakteristik kann beispielsweise zur Anzeige und zur Einstellung des Wareneinsatzes an Kaffee in g verwendet werden.

Exemplarstreuungen von Espressomaschinen oder Kaffeevollautomaten (beispielsweise aufgrund von Mahlscheibentoleranzen) sind nun einfach handzuhaben und können in einen robusten Mahlprozess überführt werden.

Durch zyklische, automatische Überprüfung kann das Einlauf- und/oder das Verschleißverhalten der Maschine bzw. der Mühle hinsichtlich der Korngrößenverteilung erkannt und korrigiert werden. Auch kann automatisch eine Zunahme oder ein Abnahme der Dosiermenge (pro Zeiteinheit gemahlene Kaffeemehlmenge) erkannt werden und über eine Software durch eine kürzere oder längere Mahldauer ausgeglichen werden, indem z.B. beim Absinken der in einem definierten Zeitintervall gemahlenen Kaffeemehlmenge die Länge des Zeitintervalls der Mahlung entsprechend erhöht wird.

Über die ermittelte Korngrößenverteilung kann eine Prognose für die Brühzeit erstellt werden; es können auch Vorbehandlungsverfahren (beispielsweise zur Art und Weise der Nasspressung) vorgeschlagen werden: Je kleiner der bestimmte Mahlgrad bzw. der x_{63,2}-Wert ist, desto höher kann die Brühzeit eingestellt werden.

Es können Einstellgrenzen bestimmt und es kann eine Überschreitung dieser Grenzen angezeigt werden. Somit kann ein mechanischer Anschlag der Maschine entfallen; ebenso ein manuelles Wiegen des Kaffeemehls.

## Patentansprüche

1. Espressomaschine oder Kaffeevollautomat mit einem Mahlwerk (1) und einer einen Brüher (2) und eine Brühkammer (3) umfassenden Brüheinrichtung
***gekennzeichnet durch***
einen zum Bestimmen des Mehlvolumens (V) einer definierten, mittels des Mahlwerks gemahlenen Kaffeepulvermenge (K) ausgebildeten Volumenbestimmungsabschnitt (4),
einen zum Bestimmen der Mehlmasse (m) dieser Kaffeepulvermenge (K) ausgebildeten Massenbestimmungsabschnitt (5), und
einen Berechnungsabschnitt (6), mit dem auf Basis eines vordefinierten, bevorzugt im Berechnungsabschnitt selbst abgespeicherten Zusammenhangs (Z) zwischen der Korngrößenverteilung und/oder dem Mahlgrad von gemahlenem Kaffee einerseits und der Masse und dem Volumen oder einer aus diesen beiden Größen abgeleiteten Größe, insbesondere der Dichte, des gemahlenen Kaffees andererseits, aus dem bestimmten Mehlvolumen (V) und der bestimmten Mehlmasse (m) die Korngrößenverteilung und/oder der Mahlgrad dieser Kaffeepulvermenge (K) berechenbar ist/sind.

2. Espressomaschine oder Kaffeevollautomat nach dem vorhergehenden Anspruch
***dadurch gekennzeichnet, dass***
der Volumenbestimmungsabschnitt (4) und/oder der Massenbestimmungsabschnitt (5) zum Bestimmen des Mehlvolumens (V) und/oder der Mehlmasse (m) einer in der Brühkammer (3) vorhandenen Kaffeepulvermenge (K) ausgebildet ist.

3. Espressomaschine oder Kaffeevollautomat nach einem der vorhergehenden Ansprüche
***gekennzeichnet durch***
eine Sammelkammer, die zur Aufnahme der definierten, gemahlenen Kaffeepulvermenge (K) ausgebildet ist, und ein Presselement, das zum Verpressen dieser Kaffeepulvermenge (K) in der Sammelkammer ausgebildet ist,
wobei bevorzugt der Brüher (2) einen Brühzylinder (7) und, als Presselement, einen in diesem Brühzylinder verschiebbaren Brühkolben (8) aufweist und bevorzugt die Sammelkammer die im Brühzylinder zwischen einem Brühkolbenende (8a) und dem diesem Brühkolbenende gegenüberliegenden Brühzylinderende (7a) ausgebildete Brühkammer (3) ist.

4. Espressomaschine oder Kaffeevollautomat nach dem vorhergehenden Anspruch
***dadurch gekennzeichnet, dass***
der Volumenbestimmungsabschnitt (4) zum Bestimmen einer Position des Presselements nach einem Pressen, insbesondere nach einem Trockenpressen, der Kaffeepulvermenge (K) und/oder eines Verfahrweges des Presselements während eines solchen Pressens und zum Bestimmen des Mehlvolumens (V) der Kaffeepulvermenge (K) auf Basis dieser Position und/oder dieses Verfahrwegs ausgebildet ist
und/oder
dass der Massenbestimmungsabschnitt (5) zum Bestimmen einer Position des Presselements nach einem Pressen, insbesondere nach einem Nasspressen, der Kaffeepulvermenge (K) und/oder eines Verfahrweges des Presselements während eines solchen Pressens und zum Bestimmen der Mehlmasse (m) der Kaffeepulvermenge (K) auf Basis dieser Position und/oder dieses Verfahrwegs ausgebildet ist, wobei bevorzugt die Mehlmasse (m) der Kaffeepulvermenge (K) dadurch bestimmbar ist, dass zunächst die Position des Presselements nach einem Nasspressen der Kaffeepulvermenge (K) und/oder der Verfahrweg des Presselements während eines solchen Nasspressens bestimmt wird/werden, dass sodann aus dieser Position und/oder diesem Verfahrweg das Nasspressvolumen dieser Kaffeepulvermenge (K) bestimmt wird und dass schließlich aus dem bestimmten Nasspressvolumen mittels eines vordefinierten, bevorzugt im Berechnungsabschnitt (6) abgespeicherten Zusammenhangs (A) zwischen der Masse von gemahlenem Kaffee einerseits und dem Nassvolumen des gemahlenen Kaffees andererseits die Mehlmasse (m) dieser Kaffeepulvermenge (K) berechnet wird.

5. Espressomaschine oder Kaffeevollautomat nach einem der beiden vorhergehenden Ansprüche
***dadurch gekennzeichnet, dass***
das Verpressen der Kaffeepulvermenge (K) in der Sammelkammer mit einem vordefinierten Presskraftverlauf, insbesondere mit mindestens einer konstanten, vordefinierten Presskraft durchführbar ist
und/oder
dass die Brüheinrichtung so ausgebildet ist, dass mit ihr die Kaffeepulvermenge (K) wahlweise in trockenem Zustand oder in nassem Zustand verpressbar ist,
wobei bevorzugt die Kaffeepulvermenge (K) mit dem Presselement mit einer vordefinierten konstanten, ersten Presskraft in trockenem Zustand verpressbar und/oder die Kaffeepulvermenge (K) mit dem Presselement mit einer vordefinierten konstanten, zweiten Presskraft in nassem Zustand verpressbar ist, wobei besonders bevorzugt die zweite Presskraft um mindestens den Faktor 5, besonders bevorzugt um mindestens den Faktor 10, besonders bevorzugt um mindestens den Faktor 20 größer als die erste Presskraft ist.

6. Espressomaschine oder Kaffeevollautomat nach einem der drei vorhergehenden Ansprüche
***gekennzeichnet durch***
eine mittels eines Antriebsmotors bewegbare, das Presselement antreibende Spindel, deren Zahl von Umdrehungen um ihre Spindelachse erfassbar ist, einen Hall-Element basierten Lageerkennungssensor, eine Lichtschranke, einen ultraschallbasierten Lageerkennungssensor und/oder einen kapazitiven Lageerkennungssensor, mittels derer/dessen die Position des Presselements nach dem Pressen der Kaffeepulvermenge (K) und/oder der Verfahrweg des Presselements während des Pressens der Kaffeepulvermenge (K) bestimmbar ist.

7. Espressomaschine oder Kaffeevollautomat nach einem der vier vorhergehenden Ansprüche
***dadurch gekennzeichnet, dass***
die Presskraft und/oder der Presskraftverlauf des Presselements feststellbar ist, wobei dies bevorzugt durch Messen und Auswerten der Stromaufnahme eines das Presselement antreibenden Antriebsmotors durchführbar ist, und/oder dass die Pressung durch das Presselement bei Erreichen einer vordefinierten Presskraft im erreichten Zustand einfrierbar ist.

8. Espressomaschine oder Kaffeevollautomat nach einem der vorhergehenden Ansprüche
***dadurch gekennzeichnet, dass***
mit dem Volumenbestimmungsabschnitt (4), dem Massenbestimmungsabschnitt (5) und der Berechnungseinheit (6) mehrfach ein Mehlvolumen, eine Mehlmasse und daraus eine Dichte ein und derselben gemahlenen Kaffeepulvermenge und/oder Mehlvolumina, Mehlmassen und daraus Dichten verschiedener gemahlener Kaffeepulvermengen berechenbar ist/sind, dass aus diesen Dichtewerten ein Dichtemittelwert berechenbar ist und dass aus diesem Dichtemittelwert anhand des vordefinierten Zusammenhangs (Z) die Korngrößenverteilung und/oder der Mahlgrad dieser Kaffeepulvermenge(n) berechenbar ist/sind.

9. Espressomaschine oder Kaffeevollautomat nach einem der vorhergehenden Ansprüche
***gekennzeichnet* durch**
eine bevorzugt einen Stellmotor umfassende Stell- und Regelvorrichtung (9) zum Verändern eines die Korngrößenverteilung und/oder den Mahlgrad von **durch** das Mahlwerk zu mahlenden Kaffeepulvermengen beeinflussenden Parameters des Mahlwerks (1), insbesondere des mittleren Abstands zweier Mahlscheiben des Mahlwerks, anhand einer/eines für eine definierte Kaffeepulvermenge (K) bestimmten Korngrößenverteilung und/oder Mahlgrads
und/oder
**dadurch**, dass der Volumenbestimmungsabschnitt (4), der Massenbestimmungsabschnitt (5) und/oder der Berechnungsabschnitt (6) zumindest ein, bevorzugt mehrere gemeinsame(s) Bauelement(e) aufweisen und/oder als gemeinsame Baugruppe (4, 5, 6) der Espressomaschine oder des Kaffeevollautomaten ausgebildet sind.

10. Verfahren zum Bestimmen der Korngrößenverteilung und/oder des Mahlgrads von Kaffeepulvermengen in einer Espressomaschine oder in einem Kaffeevollautomat mit einem Mahlwerk (1) und einer einen Brüher (2) und eine Brühkammer (3) umfassenden Brüheinrichtung, wobei das Verfahren bevorzugt mit einer Espressomaschine oder einem Kaffeevollautomaten nach einem der Ansprüche 1 bis 9 durchgeführt wird,
**dadurch *gekennzeichnet, dass***
das Mehlvolumen (V) einer definierten, mittels des Mahlwerks gemahlenen Kaffeepulvermenge (K) bestimmt wird,
dass die Mehlmasse (m) dieser Kaffeepulvermenge (K) bestimmt wird, und
dass auf Basis eines vordefinierten Zusammenhangs (Z) zwischen der Korngrößenverteilung und/oder dem Mahlgrad von gemahlenem Kaffee einerseits und der Masse und dem Volumen oder einer aus diesen beiden Größen abgeleiteten Größe, insbesondere der Dichte, des gemahlenen Kaffees andererseits, aus dem bestimmten Mehlvolumen (V) und der bestimmten Mehlmasse (m) die Korngrößenverteilung und/oder der Mahlgrad dieser Kaffeepulvermenge (K) berechnet wird.

## Claims

1. Espresso machine or fully automatic coffee machine having a grinder (1) and an infusion device comprising an infuser (2) and an infusion chamber (3),
***characterised by***
a volume-determining portion (4) designed to determine the ground volume (V) of a defined quantity of coffee powder (K) ground by means of the grinder,
a mass-determining portion (5) designed to determine the ground mass (m) of this quantity of coffee powder (K), and
a calculation portion (6) with which, on the basis of a predefined correlation (Z), which is stored preferably in the calculation portion itself, between the grain size distribution and/or the degree of grinding of ground coffee, on the one hand, and the mass and the volume or a variable derived from these two variables, in particular the density, of the ground coffee, on the other hand, there can be calculated from the determined ground volume (V) and from the determined ground mass (m), the grain size distribution and/or the degree of grinding of this quantity of coffee powder (K).

2. Espresso machine or fully automatic coffee machine according to the preceding claim,
***characterised in that**,*
the volume-determining portion (4) and/or the mass-determining portion (5) is designed to determine the ground volume (V) and/or the ground mass (m) of a quantity of coffee powder (K) present in the infusion chamber (3)

3. Espresso machine or fully automatic coffee machine according to one of the preceding claims,
***characterised by***
a collection chamber which is designed to receive the defined quantity of ground coffee powder (K), and a pressing element which is designed to compress this quantity of coffee powder (K) in the collection chamber,
wherein the infuser (2) preferably has an infusion cylinder (7) and, as pressing element, an infusion piston (8) which is displaceable in this infusion cylinder and the collection chamber is preferably the infusion chamber (3) configured in the infusion cylinder between one infusion piston end (8a) and the infusion cylinder end (7a) located opposite this infusion piston end.

4. Espresso machine or fully automatic coffee machine according to the preceding claim,
***characterised in* that**,
the volume-determining portion (4) is designed to determine a position of the pressing element after pressing, in particular after dry-pressing, of the quantity of coffee powder (K) and/or a travel path of the pressing element during such pressing and to determine the ground volume (V) of the quantity of coffee powder (K) on the basis of this position and/or this travel path
and/or
**in that** the mass-determining portion (5) is designed to determine a position of the pressing element after pressing, in particular after wet-pressing, of the quantity of coffee powder (K) and/or a travel path of the pressing element during such pressing and to determine the ground mass (m) of the quantity of coffee powder (K) on the basis of this position and/or this travel path, wherein the ground mass (m) of the quantity of coffee powder (K) is preferably able to be determined by firstly the position of the pressing element after wet-pressing of the quantity of coffee powder (K) and/or the travel path of the pressing element during such wet-pressing being determined, thereupon, from this position and/or this travel path, the wet-pressed volume of this quantity of coffee powder (K) is determined and finally, from the determined wet-pressed volume, by means of a predefined correlation (A), which is stored preferably in the calculation portion (6), between the mass of ground coffee, on the one hand, and the wet volume of the ground coffee, on the other hand, the ground mass (m) of this quantity of coffee powder (K) is calculated.

5. Espresso machine or fully automatic coffee machine according to one of the two preceding claims,
***characterised in* that**,
the compression of the quantity of coffee powder (K) in the collection chamber can be carried out with a predefined pressing force course, in particular with at least one constant, predefined pressing force,
and/or
**in that** the infusion device is designed in such a way that, with it, the quantity of coffee powder (K) can be compressed optionally in a dry state or wet state,
wherein, preferably, the quantity of coffee powder (K) is able to be compressed by the pressing element at a predefined constant first pressing force in the dry state and/or the quantity of coffee powder (K) is able to be compressed by the pressing element at a predefined constant second pressing force in the wet state, wherein it is particularly preferred for the second pressing force to be greater than the first pressing force by at least a factor of 5, particularly preferred by at least a factor of 10, particularly preferred by at least a factor of 20.

6. Espresso machine or fully automatic coffee machine according to one of the three preceding claims,
***characterised by***
a spindle which can be moved by means of a drive motor and drives the pressing element, the number of revolutions of which around its spindle axis can be detected, a Hall element-based position-recognition sensor, a photoelectric barrier, an ultrasound-based position-recognition sensor and/or a capacitative position-recognition sensor, by means of which the position of the pressing element after pressing of the quantity of coffee powder (K) and/or the travel path of the pressing element during pressing of the quantity of coffee powder (K) can be determined.

7. Espresso machine or fully automatic coffee machine according to one of the four preceding claims,
***characterised in* that**,
the pressing force and/or the pressing force course of the pressing element can be established, wherein this can preferably be carried out by measuring and evaluating the current consumption of a drive motor driving the pressing element, and/or **in that** pressing by the pressing element can be frozen in the reached state upon reaching a predefined pressing force.

8. Espresso machine or fully automatic coffee machine according to one of the preceding claims,
***characterised in* that**,
with the volume-determining portion (4), the mass-determining portion (5) and the calculation unit (6), a ground volume, a ground mass and, from this, a density of one and the same ground quantity of coffee powder can be calculated several times and/or ground volumes, ground masses and, from this, densities of different quantities of ground coffee can be calculated, **in that** a density average can be calculated from these density values and **in that** the grain size distribution and/or the degree of grinding of this/these quantity(ies) of coffee powder can be calculated from this density average with the predefined correlation (Z).

9. Espresso machine or fully automatic coffee machine according to one of the preceding claims,
***characterised by***
an adjustment and control device (9) preferably comprising a servomotor for changing a parameter of the grinder (1) which influences the grain size distribution and/or the degree of grinding of quantities of coffee powder to be ground by the grinder, in particular the average spacing of two grinding discs of the grinder, with reference to a grain size distribution and/or a degree of grinding determined for a defined quantity of coffee powder (K)
and/or
in that the volume-determining portion (4), the mass-determining portion (5) and/or the calculation portion (6) have at least one, preferably a plurality of, common component(s) and/or are designed as a common component assembly (4, 5, 6) of the espresso machine or of the fully automatic coffee machine.

10. Method for determining the grain size distribution and/or the degree of grinding of quantities of coffee powder in an espresso machine or in a fully automatic coffee machine having a grinder (1) and an infusion device comprising an infuser (2) and an infusion chamber (3), wherein the method is preferably carried out with an espresso machine or a fully automatic coffee machine according to one of claims 1 to 9,
***characterised in that**,*
the ground volume (V) of a defined quantity of coffee powder (K) ground by means of the grinder is determined,
**in that** the ground mass (m) of this quantity of coffee powder (K) is determined, and
**in that**, on the basis of a predefined correlation (Z) between the grain size distribution and/or the degree of grinding of ground coffee, on the one hand, and the mass and the volume or a variable derived from these two variables, in particular the density, of the ground coffee, on the other hand, there is calculated from the determined ground volume (V) and the determined ground mass (m), the grain size distribution and/or the degree of grinding of this quantity of coffee powder (K).

## Revendications

1. Machine à expresso ou distributeur automatique de café doté d'un broyeur (1) et un dispositif d'échaudage comprenant un élément chauffant (2) et un compartiment d'échaudage (3),
caractérisé(e) par
- une section de détermination du volume (4) façonnée pour déterminer le volume de mouture (V) d'une quantité de poudre de café (K) définie moulue au moyen du broyeur,
- une section de détermination de la masse (5) façonnée pour déterminer la masse de mouture (m) de cette quantité de poudre de café (K), et
- une section de calcul (6) au moyen de laquelle la répartition de la taille des grains et/ou le degré de mouture de cette quantité de poudre de café (K) peut/peuvent être calculé(s) à partir du volume de mouture (V) déterminé et de la masse de mouture (m) déterminée sur la base d'un rapport (Z) prédéfini, de préférence enregistré dans la section de calcul elle-même, entre d'une part la répartition de la taille des grains et/ou le degré de mouture du café moulu, et d'autre part, la masse et le volume ou une grandeur déduite à partir de ces deux grandeurs, en particulier la densité, du café moulu.

2. Machine à expresso ou distributeur automatique de café selon la revendication précédente, caractérisé(e) en ce que la section de détermination du volume (4) et/ou la section de détermination de la masse (5) est façonnée pour déterminer le volume de mouture (V) et/ou la masse de mouture (m) d'une quantité de poudre de café (K) présente dans le compartiment d'échaudage (3).

3. Machine à expresso ou distributeur automatique de café selon l'une des revendications précédentes, caractérisé(e) par un compartiment de collecte qui est façonné pour recevoir la quantité de poudre de café (K) moulue définie et un élément de pressage qui est façonné pour comprimer cette quantité de poudre de café (K) dans le compartiment de collecte, de préférence, l'élément chauffant (2) présentant un cylindre d'échaudage (7), et en tant qu'élément de pressage, un piston d'échaudage (8) coulissant dans ce cylindre d'échaudage, et de préférence, le compartiment de collecte est le compartiment d'échaudage (3) façonné dans le cylindre d'échaudage entre une extrémité du piston d'échaudage (8a) et l'extrémité du cylindre d'échaudage (7a) située en opposition à cette extrémité du piston d'échaudage.

4. Machine à expresso ou distributeur automatique de café selon la revendication précédente, caractérisé(e) en ce que la section de détermination du volume (4) est façonnée pour déterminer une position de l'élément de pressage après un pressage, en particulier après un pressage à sec, de la quantité de poudre de café (K) et/ou une course de déplacement de l'élément de pressage pendant un tel pressage et pour déterminer le volume de mouture (V) de la quantité de poudre de café (K) sur la base de cette position et/ou de cette course de déplacement, et/ou en ce que la section de détermination de la masse (5) est façonnée pour déterminer une position de l'élément de pressage après un pressage, en particulier après un pressage humide, de la quantité de poudre de café (K) et/ou une course de déplacement de l'élément de pressage pendant un tel pressage et pour déterminer la masse de mouture (m) de la quantité de poudre de café (K) sur la base de cette position et/ou de cette course de déplacement, de préférence, la masse de mouture (m) de la quantité de poudre de café (K) pouvant être déterminée en ce que d'abord, la position de l'élément de pressage après un pressage humide de la quantité de poudre de café (K) et/ou la course de déplacement de l'élément de pressage pendant un tel pressage humide est/sont déterminée(s), en ce qu'ensuite, le volume de pressage humide de cette quantité de poudre de café (K) est déterminé à partir de cette position et/ou de cette course de déplacement, et en ce qu'enfin, la masse de mouture (m) de cette quantité de poudre de café (K) est calculée à partir du volume de pressage humide déterminé au moyen d'un rapport (A) prédéfini, de préférence enregistré dans la section de calcul (6), entre d'une part la masse du café moulu, et d'autre part, le volume humide du café moulu.

5. Machine à expresso ou distributeur automatique de café selon l'une des deux revendications précédentes, caractérisé(e) en ce que le pressage de la quantité de poudre de café (K) dans le compartiment de collecte est réalisable avec une évolution prédéfinie de la force de pressage, en particulier avec au moins une force de pressage constante prédéfinie, et/ou en ce que le dispositif d'échaudage est façonné de telle sorte qu'il permet de comprimer la quantité de poudre de café (K) au choix à l'état sec ou à l'état humide, de préférence, la quantité de poudre de café (K) étant compressible à l'état sec avec une première force de pressage constante prédéfinie au moyen de l'élément de pressage et/ou la quantité de poudre de café (K) étant compressible à l'état humide avec une deuxième force de pressage constante prédéfinie au moyen de l'élément de pressage, de façon particulièrement préférée, la deuxième force de pressage étant supérieure à la première force de pressage d'au moins un facteur 5, de façon particulièrement préférée d'au moins un facteur 10 et de façon particulièrement préférée d'au moins un facteur 20.

6. Machine à expresso ou distributeur automatique de café selon l'une des trois revendications précédentes, caractérisé(e) par une broche entraînant l'élément de pressage, mobile au moyen d'un moteur d'entraînement, dont le nombre de rotations autour de son axe de broche peut être détecté, un capteur de détection de position basé sur un élément de Hall, une barrière lumineuse, un capteur de détection de position basé sur les ultrasons et/ou un capteur de détection de position capacitif au moyen duquel/desquels la position de l'élément de pressage après le pressage de la quantité de poudre de café (K) et/ou la course de déplacement de l'élément de pressage pendant le pressage de la quantité de poudre de café (K) peut être déterminée.

7. Machine à expresso ou distributeur automatique de café selon l'une des quatre revendications précédentes, caractérisé(e) en ce que la force de pressage et/ou l'évolution de la force de pressage de l'élément de pressage est détectable, cela étant de préférence réalisable en mesurant et en analysant la consommation de courant d'un moteur d'entraînement entraînant l'élément de pressage et/ou en ce que le pressage par l'élément de pressage peut être arrêté en atteignant, à l'état atteint, une force de pressage prédéfinie.

8. Machine à expresso ou distributeur automatique de café selon l'une des revendications précédentes, caractérisé(e) en ce qu'avec la section de détermination du volume (4), la section de détermination de la masse (5) et l'unité de calcul (6), un volume de mouture, une masse de mouture et, à partir de cela, une densité d'une seule et même quantité de poudre de café moulue et/ou les volumes de mouture, les masses de mouture et, à partir de cela, les densités de différentes quantités de poudre de café moulues peut/peuvent être calculé(s) plusieurs fois, en ce qu'à partir de ces valeurs de densité, une valeur moyenne de densité peut être calculée, et en ce qu'à partir de cette valeur moyenne de densité, la répartition de la taille des grains et/ou le degré de mouture de cette(ces) quantité(s) de poudre de café peut/peuvent être calculé(s) à l'aide du rapport (Z) prédéfini.

9. Machine à expresso ou distributeur automatique de café selon l'une des revendications précédentes, caractérisé(e) par un dispositif de commande et de réglage (9) comprenant de préférence un moteur de commande destiné à modifier un paramètre du broyeur (1) influençant la répartition de la taille des grains et/ou le degré de mouture de quantités de poudre de café qui doivent être moulues par le broyeur, en particulier la distance moyenne entre deux disques de broyage du broyeur, à l'aide d'une répartition de la taille des grains et/ou d'un degré de mouture déterminé(e) pour une quantité de poudre de café (K) définie, et/ou en ce que la section de détermination du volume (4), la section de détermination de la masse (5) et/ou la section de calcul (6) présentent au moins un, de préférence plusieurs composants communs et/ou sont façonnées en tant que module de construction commun (4, 5, 6) de la machine à expresso ou du distributeur automatique de café.

10. Procédé pour déterminer la répartition de la taille des grains et/ou le degré de mouture de quantités de poudre de café dans une machine à expresso ou dans un distributeur automatique de café avec un broyeur (1) et un dispositif d'échaudage comprenant un élément chauffant (2) et un compartiment d'échaudage (3), le procédé étant de préférence réalisé avec une machine à expresso ou un distributeur automatique de café selon l'une des revendications 1 à 9, **caractérisé en ce que** le volume de mouture (V) d'une quantité de poudre de café (K) définie, moulue au moyen du broyeur, est déterminé, **en ce que** la masse de mouture (m) de cette quantité de poudre de café (K) est déterminée, et **en ce que** la répartition de la taille des grains et/ou le degré de mouture de cette quantité de poudre de café (K) est calculé(e) à partir du volume de mouture (V) déterminé et de la masse de mouture (m) déterminée sur la base d'un rapport (Z) prédéfini entre d'une part la répartition de la taille des grains et/ou le degré de mouture du café moulu, et d'autre part, la masse et le volume ou une grandeur déduite à partir de ces deux grandeurs, en particulier la densité, du café moulu.
